# EUROPÄISCHE PATENTSCHRIFT

(11) **EP 0 895 637 B1**
(45) Veröffentlichungstag und Bekanntmachung des Hinweises auf die Patenterteilung: **10.04.2002**
(21) Anmeldenummer: 97921696.7
(22) Anmeldetag: 22.04.1997
(51) Int. Cl.: G11B 23/00, G11B 20/00

(54) **CD MIT EINGEBAUTEM CHIP**
CD WITH BUILT IN CHIP
DISQUE COMPACT A PUCE INTEGREE

(30) Priorität: 26.04.1996 DE 19616819
(43) Veröffentlichungstag der Anmeldung: 10.02.1999
(73) Patentinhaber: Giesecke & Devrient GmbH, 81677 München (DE)
(72) Erfinder: DIEZMANN, Nils, D-85560 Ebersberg (DE); FINKENZELLER, Klaus, D-80939 München (DE)
(74) Vertreter: Klunker . Schmitt-Nilson . Hirsch
(86) Internationale Anmeldenummer: EP9702034
(87) Internationale Veröffentlichungsnummer: WO9741562

(56) Entgegenhaltungen:
- DE-A- 4 403 206
- US-A- 4 910 625
- US-A- 5 012 380

## Beschreibung

Die Erfindung betrifft einen Datenträger in Form einer CD-ROM bzw. einer mehrfach beschreibbaren CD, die üblicherweise aus einem kreisförmigen CD-Körper mit einer darauf aufgebrachten, informationstragenden Schicht besteht.

Die CD ist heutzutage ein Massenprodukt, das beispielsweise als Speichermedium in der Computertechnik eingesetzt wird. Es handelt sich dabei um ein Speichermedium, auf dem Daten und Programme, wie Systemsoftware oder Computerspiele in der Regel bereits bei der Herstellung der CD dauerhaft gespeichert werden. Besonders weit verbreitet ist derzeit eine Ausführungsform der CD, die nur einmal beschreibbar ist und daher als CD-ROM bezeichnet wird. Der Speicherinhalt einer derartigen CD, im folgenden Informationen genannt, ist vollständig auslesbar und nicht veränderbar. Es können insbesondere keine Daten hinzugefügt werden und keine Zwischenergebnisse auf der CD abgespeichert werden. Es sind auch CDs verfügbar, die mehrmals beschrieben werden können. Häufig ist es jedoch nicht erwünscht, Zwischenergebnisse oder andere temporäre Daten in dasselbe Speichermedium einzuschreiben, in dem bereits Programme, Computerspiele oder ähnliches permanent gespeichert sind. Derartige Abspeicherungen werden daher in der Regel auf einem angeschlossenen Rechner erfolgen. Das bedeutet, daß die CD, sofern die abgespeicherten Zwischenergebnisse zur Weiterverarbeitung wiederverwendet werden müssen, nur mit diesem speziellen Rechner benutzt werden kann. Es besteht natürlich auch die Möglichkeit, die Zwischenergebnisse auf einem gesonderten Speichermedium, wie einer Minidisk, zu speichern und fortan bei der CD zu belassen. Die CD und das gesonderte Speichermedium sind dann in jedem Rechner verwendbar, der zwei dafür geeignete Schnittstellen besitzt. Kommt jedoch das gesonderte Speichermedium abhanden, so gehen damit gleichzeitig alle Zwischenergebnisse unwiederbringbar verloren.

Ein ähnliches Problem stellt sich im Zusammenhang mit dem Ausführungs- bzw. Kopierschutz von auf der CD gespeicherten Informationen. Zum Zwecke des Ausführungs- bzw. Kopierschutzes von CDs ist es bekannt, die CDs so herzustellen, daß sie nur mit zusätzlicher Hardware auslesbar sind. Die Informationen auf der CD können z. B. verschlüsselt sein, und die zusätzliche Hardware kann die zur Entschlüsselung erforderlichen Daten oder Algorithmen enthalten. Die zusätzliche Hardware besteht üblicherweise aus einer Chipkarte mit z. B. benutzerspezifischen Daten und/oder den Schlüsseln bzw. Algorithmen, die es erst ermöglichen, die auf der CD gespeicherten Informationen zu entschlüsseln. Kommt jedoch die Chipkarte abhanden, so können die auf der CD gespeicherten Informationen nicht mehr genutzt werden. Ein derartiges Kopierschutzverfahren ist aus der DE-A-44 19 115 bekannt. Dort wird die Ausführung einer auf einem Sekundärspeicher-Medium gespeicherten Software erst zugelassen, nachdem eine Legitimierung mittels einer Chipkarte stattgefunden hat, die zu diesem Zweck in einen mit dem Rechner verbundenen Kartenleser eingeführt wird.

Ein weiterer Nachteil der Speicherung von zusätzlichen und möglicherweise veränderbaren Daten außerhalb der CD auf einem separaten Datenträger ist darin zu sehen, daß die gleichzeitige Verarbeitung der CD-Informationen und der Daten des separaten Datenträgers zwei entsprechend gestaltete Schnittstellen erfordert. Der technische Aufwand dafür ist relativ groß.

Aus der EP 0 230 069 B1 ist eine Chipkarte bekannt, die örtlich neben einem Mikrochip einen rotationssymmetrischen optischen Speicher aufweist. Der Chip kann einen Speicher (RAM) und einen Prozessor enthalten, mit dem das Auslesen codierter optischer Speicherdaten erst möglich wird. Der Zweck der Chipkarte mit rotationssymmetrischem optischen Speicher besteht darin, daß ein Auslesen eines sich drehenden Speichermediums zügiger erfolgt, als ein translatorisches zeilenweises Auslesen der bis dahin bekannten Magnetstreifen. Gemäß dieser Lehre wird also ein in der Chipkartentechnologie bekanntes Speichermedium durch ein in diesem Gebiet völlig neuartiges Speichermedium, einem rotationssymmetrischen optischen Speicher, ersetzt. Die Kommunikation mit dem neben dem optischen Speicher angeordneten Chip ist aber nur möglich, solange sich die Chipkarte noch nicht in Rotation befindet Ein gleichzeitiges Auslesen des optischen Speichers und Kommunizieren mit dem Chip ist nicht möglich.

Aus der DE 44 03 206 A1 ist eine CD mit einem Chip bekannt, der als Kopierschutz dient.

Aus der US-PS 4,910,625 ist eine Daten-Diskette bekannt, auf die eine Markierung aus einem ferromagnetischen Material aufgebracht ist.

Die vorliegende Erfindung ist dagegen auf eine CD gerichtet, und hat zur Aufgabe, eine CD zu schaffen, die es ermöglicht, zusätzlich zu den auf der CD gespeicherten Informationen weitere individuelle Daten zu speichern, wie z. B. Zwischenergebnisse, Algorithmen und Schlüssel, die während des Betriebs der CD auslesbar und gegebenenfalls veränderbar sind. Eine weitere Aufgabe der vorliegenden Erfindung besteht darin, eine Vorrichtung zu schaffen, mit der die zusätzlichen Daten in die CD eingeschrieben und aus der CD ausgelesen werden können.

Diese Aufgaben werden erfindungsgemäß durch die in den unabhängigen Ansprüchen angegebenen Merkmale gelöst. Dabei wird in die CD, die eine monolithisch integrierte Schaltung, nachfolgend Chip genannt, aufweist ein CD-Kopplungselement zur kontaktlosen Übertragung von Daten zwischen dem Chip und einem Datenverarbeitungsgerät integriert. Vorzugsweise sind der Chip und das CD-Kopplungselement zwischen dem Mittelloch der CD und der innersten Informationsspur angeordnet. In einer Variante der Erfindung ist das CD-Kopplungselement nicht in die CD integriert, sondern in eines der beiden Andruckplättchen des CD-Laufwerks, die von beiden Seiten gegen die CD gepreßt werden. Eines dieser Andruckplättchen ist mit einem Elektromotor verbunden und versetzt die CD in Rotation. Das andere Andruckplättchen dient als Gegenlager. Das Andruckplättchen, das das CD-Kopplungselement enthält, ist mit Kontakten versehen. Diese Kontakte werden gegen entsprechende Kontaktflächen auf der Oberfläche der CD gepreßt, die leitend mit den Anschlüssen des Chips verbunden sind. Diese Variante hat den Vorteil, daß die CD lediglich mit Kontaktflächen ausgestattet werden muß, da die kontaktlose Datenübertragung zu dem Datenverarbeitungsgerät über das im Andruckplättchen integrierte CD-Kopplungselement erfolgt.

Der in die CD integrierte Chip ist als reiner Speicherchip ausgebildet, wenn z. B. lediglich Zwischenergebnisse abgespeichert werden sollen. In einer vorteilhaften Ausgestaltung ist der Chip als Prozessorchip ausgebildet, auf dem Algorithmen ablaufen oder Sicherheitsstrukturen realisiert sein können, um einen Kopier- und Ausrührungsschutz für Software oder eine Zugangskontrolle zu Daten auf der CD zu ermöglichen. Dadurch wird gewährleistet, daß die korrekte bzw. daß überhaupt erst eine Bearbeitung der auf der CD gespeicherten Informationen möglich ist. In der Regel wird man einen Chip auswählen, bei dem die Datenverarbeitung über elektrische Signale erfolgt. Es ist jedoch auch denkbar, optische Chips zu verwenden, bei denen optische Signale verarbeitet werden. Die optischen Chips stehen derzeit zwar erst am Anfang ihrer Entwicklung, können im Rahmen der vorliegenden Erfindung jedoch insbesondere für die Ausführungsbeispiele interessant werden, bei denen der Datenaustausch zwischen dem Chip und dem Datenverarbeitungsgerät ebenfalls mittels optischer Signale erfolgt.

Das CD-Kopplungselement besteht vorzugsweise aus einer Spule, die elektrisch leitend mit dem Chip verbunden ist, gegebenenfalls über die Kontakte des Andruckplättchens und die Kontaktflächen auf der CD-Oberfläche. Mit der Spule können sowohl Daten als auch Energie sowie der Systemtakt zwischen dem Chip und einer mit dem Datenverarbeitungsgerät verbundenen zweiten Spule, im folgenden Laufwerk-Kopplungselement genannt, kontaktlos übertragen werden. Das CD-Kopplungselement kann zusammen mit dem Chip in einem geeigneten Harz zu einem festen Modul vergossen sein oder laminiert sein und in einer entsprechenden Aussparung des CD-Körpers aufgenommen sein. Diese Aussparung wird vorzugsweise bereits bei der Herstellung des CD-Körpers berücksichtigt, kann aber auch erst in einem nachfolgenden Prozeß aus dem CD-Körper herausgefräst werden. Das Modul ist chemisch oder physikalisch, beispielsweise mittels eines Klebers oder eines Lacks in der Aussparung fixiert, kann aber auch thermisch mit dem CD-Körper verbunden worden sein, sofern das zur Modulherstellung verwendete Material zu dem Material des CD-Körpers kompatibel ist. Eine weitere Möglichkeit der Integration des fertigen Moduls in den CD-Körper besteht darin, das Modul bereits bei der CD-Herstellung in die Spritzgußform einzulegen und zu umspritzen, wenn die informationstragende Kunststoffschicht hergestellt wird, auf die eine reflektierende Metallschicht aufgedampft wird oder ein anderes geeignetes Speichermedium aufgebracht wird. Statt des fertigen Moduls kann auch ein stabilisierter Rohling verwendet werden, bestehend aus CD-Kopplungselement und Chip sowie einem Material, das dem Gebilde ausreichend Halt verleiht, so daß es den Spritzgußvorgang unbeschadet übersteht.

Falls es sich bei der CD um eine CD-ROM handelt, bei der die Information in Form einer reflektierenden Metallschicht aufgebracht ist, kann das CD-Kopplungselement auch so ausgebildet sein, daß es einen Bestandteil der reflektierenden Metallschicht der CD bildet, wobei dieser Bestandteil aber elektrisch getrennt sein sollte von der übrigen reflektierenden Metallschicht mit den optisch auslesbaren Informationsspuren. In diesem Falle würde selbstverständlich nur der Chip auf eine der oben beschriebenen Arten in den CD-Körper eingesetzt werden.

Als Alternative zur Spule, mit der Daten, Energie und Systemtakt für den Chip induktiv übertragen werden, kann das CD-Kopplungselement auch als Dipolantenne ausgeführt sein, mit deren Hilfe elektromagnetische Wellen übermittelt werden können. Die elektromagnetischen Wellen können ebenfalls Daten, Energie und Systemktakt übertragen.

Weiterhin kann das CD-Kopplungselement als kapazitive Koppelfläche ausgebildet sein. Über diese kapazitive Koppelfläche können in Verbindung mit dem außerhalb der CD angeordneten Laufwerk-Kopplungselement Daten kontaktlos übertragen werden. Die kapazitive Koppelfläche des CD-Kopplungselements kann z. B. durch die reflektierende Metallschicht der CD gebildet sein. Da die kapazitive Koppelfläche zur gleichzeitigen Übertragung von Energie ungeeignet ist, muß die CD in diesem Falle entweder mit einer eigenen Energiequelle zur Energieversorgung des Chips ausgerüstet sein, z. B. mit einer integrierten Batterie, oder es ist eine zusätzliche Kopplungseinrichtung zur Energieübertragung von einer externen Energiequelle zum Chip vorzusehen, wobei die zusätzliche Kopplungseinrichtung eine weitere kapazitive Koppelfläche oder eine Spule sein kann.

In weiteren Ausführungsbeispielen ist das CD-Kopplungselement so ausgelegt, daß eine optische oder eine akustische Datenübertragung möglich ist bzw. in Sonderfällen eine Datenübertragung mittels geladenen physikalischen Teilchen. Je nach speziellen Gegebenheiten, kann auch die Energieübertragung und/oder die Übertragung des Systemkontakts über eine dieser genannten Übertragungswege erfolgen.

Das CD-Kopplungselement kann auch Bestandteil der auf dem Chip integrierten Schaltung sein. Ein derartiger Chip kann z. B. in einer Ausfräsung des CD-Körpers untergebracht und darin mit einem Harz vergossen sein. In diesem Fall wird es zur Erreichung einer ausreichend hohen Datenübertragungsrate zwischen dem Chip und dem Datenverarbeitungsgerät unter Umständen erforderlich sein, mehrere Laufwerk-Kopplungselemente auf dem gleichen Radius anzubringen, auf dem auch der Chip der CD angeordnet ist. Die Vorrichtung zur Kommunikation zwischen der erfindungsgemäßen CD und dem Datenverarbeitungsgerät besteht aus einem CD-Laufwerk mit zwei Andruckplättchen, zwischen die die CD eingeklemmt wird, und die die CD in Rotation versetzen. Das CD-Laufwerk weist des weiteren eine Einrichtung zum Auslesen der Informationsspuren der rotierenden CD auf und ein Laufwerk-Kopplungselement zur kontaktlosen Datenübermittlung zum und vom CD-Kopplungselement.

Das Laufwerk-Kopplungselement ist entsprechend dem CD-Kopplungselement auch als Spule, als Dipolantenne und/oder als eine oder mehrere kapazitive Koppelfläche bzw. Koppelflächen ausgebildet oder in einer Form, die für eine optische oder akustische Kopplung geeignet ist bzw. für eine Kopplung über geladene physikalische Teilchen. Vorzugsweise ist das Laufwerk-Kopplungselement oberhalb des Andruckplättchens angeordnet, das als Gegenlager dient, da auf der Seite des motorseitigen Andruckplättchens weniger Platz zur Verfügung steht. An eine Führungsplatte für das lagerseitige Andruckplättchen können eine Aussparung oder Laschen zur Anbringung des Laufwerk-Kopplungselements vorgesehen sein.

Das Laufwerk-Kopplungselement kann in einer flexiblen ring- bzw. kreisförmigen Folie mit intergriertem flexiblen Anschlußkabel mit Steckverbinder verpackt sein und so in dem CD-Laufwerk angeordnet sein. Alternativ kann das Laufwerk-Kopplungselement in oder auf einem festen ring- oder kreisförmigen Träger untergebracht sein, indem es entweder in gedruckter Form auf einer Platine vorliegt oder ähnlich dem CD-Kopplungselement mit Harz zu einem Laufwerkmodul vergossen ist. Die Verbindung zu der Platine kann über einen Datenbus in flexibler Folie oder über isolierte Kabel erfolgen und entweder gelötet oder gesteckt sein. Die Verbindung zu dem vergossenen Laufwerkmodul kann ebenfalls über flexible Folie oder Kabel erfolgen, indem diese schon bei der Herstellung des Laufwerkmoduls direkt mit diesem verschweißt werden oder mit Steckverbinder mit diesem verbunden werden.

Die Kommunikation zwischen dem Datenverarbeitungsgerät und dem Chip einerseits und dem Datenverarbeitungsgerät und der Einrichtung zum Auslesen der CD-Informationen andererseits kann entweder über zwei völlig getrennte Anschlüsse erfolgen oder über einen gemeinsamen Anschluß mit einer zwischengeschalteten Logikeinrichtung, die sowohl Hardware- als auch Software-Elemente aufweisen kann.

Im letzteren Fall ist das Datenverarbeitungsgerät, z. B. ein PC, mit der Logikeinrichtung verbunden, und in der Logikeinrichtung wird entweder eine Verbindung mit dem Chip über das Laufwerk- und das CD-Kopplungselement hergestellt oder eine Verbindung zur CD-Ausleseeinrichtung. Im einzelnen bedeutet das, daß die Kommunikation vom PC zum Chip über die gleiche Datenleitung erfolgt wie die Informationsübertragung zwischen PC und CD, d. h. es wird z. B. ein IDE- oder SCSI-Bus genutzt. Die verwendeten Adressen können CD-Adressen (Positionen und Sektoren) sein. Der Chip wird dann über solche CD-Adressen angesprochen, die auf der CD nicht realisiert sind bzw. nicht realisiert werden können oder die für zukünftige Anwendungen reserviert sind. Ebenso ist denkbar, daß verschiedenartige Adressen für CD-Daten und Chipdaten vorgesehen sind. Die Logikeinrichtung entscheidet dann anhand der Adresse, ob die Kommunikationsblöcke an die CD-Ausleseeinrichtung oder an den Chip gesendet werden. Das bedeutet auch, daß die zum Chip gesendeten Daten beispielsweise in Hochfrequenz-(HF)-Signale transformiert werden müssen, die zur Datenübertragung zwischen dem Laufwerk-Kopplungselement und dem CD-Kopplungselement geeignet sind. Diese Transformation erfolgt in einem zwischen der Logikeinrichtung und dem Laufwerk-Kopplungselement angeordneten HF-Baustein. Sowohl die Logikeinrichtung als auch der HF-Baustein sind im CD-Laufwerk als selbständige Elemente untergebracht.

Im anderen Falle, bei dem die Kommunikation zwischen PC und Chip über eine separate Datenleitung erfolgt, d. h. getrennt von der Kommunikation zwischen PC und CD, spricht der PC den Chip über eine PC-interne Schnittstelle an. Dazu kann eine PC-Einsteckkarte verwendet werden, auf der die für den Chip bestimmten HF-Signale bearbeitet werden können. D. h., der größte Teil der Hardware zur Kommunikation mit dem Chip befindet sich auf der PC-Karte und muß nicht in das Laufwerk integriert werden. Die Hardware der PC-Karte könnte auch im PC-Motherboard integriert werden.

In einem besonders vorteilhaften Ausführungsbeispiel wird hardwaremäßig nicht zwischen der Datenübertragung zum bzw. vom Chip und der Datenübertragung zur bzw. von der CD-ROM unterschieden. In beiden Fällen erfolgt die Datenübertragung mittels der Einrichtung zum Auslesen der CD-Information, d.h. optisch. Das CD-Kopplungselement ist so auszulegen, daß eine optische Kopplung möglich ist. Ein separates Laufwerk-Kopplungselement entfällt, da diese Aufgabe von der Einrichtung zum Auslesen der CD-Informaton übernommen wird. Die Datenübertragung zur bzw. von der CD-ROM und zum bzw. vom Chip erfolgt über ein und denselben Übertragungsweg.

In einer weiteren Ausgestaltung der Erfindung verfügt die Vorrichtung zur Kommunikation zwischen der CD und dem Datenverarbeitungsgerät über eine Einrichtung zum Empfangen von Zusatzinformationen von einem zweiten Informationsträger. Der zweite Informationsträger kann z. B. eine mit Kontaktflächen ausgestattete oder auch eine kontaktlose Chipkarte sein, mit der eine Zugangskontrolle zum PC realisiert werden kann.

Die Erfindung wird im folgenden beispielhaft anhand einer CD-ROM erläutert. In gleicher Weise kann jedoch auch eine mehrfach beschreibbare CD eingesetzt werden, wie beispielsweise eine magnetoptische CD oder eine optisch beschreibbare CD.
- Fig. 1: zeigt eine Aufsicht einer Ausführungsform der erfindungsgemäßen CD-ROM;
- Fig. 2: zeigt die CD-ROM aus Fig. 1 von der Seite im Schnitt;
- Fig. 3: zeigt eine erfindungsgemäße CD-ROM in einem CD-Laufwerk mit zwei unterschiedlich angeordneten Laufwerk-Kopplungselementen;
- Fig. 4: zeigt einen Ausschnitt der erfindungsgemäßen CD-ROM mit aufgesetztem lagerseitigen Andruckplättchen;
- Fig. 5a, 5b: zeigen ein Blockschaltbild und ein Flußdiagramm zur Veranschaulichung der Kommunikation zwischen einer erfindungsgemäßen CD-ROM und einem Datenverarbeitungsgerät;
- Fig. 6a, 6b: zeigen ein Blockschaltbild und ein Flußdiagramm für eine weitere Möglichkeit der Kommunikation zwischen der erfindungsgemäßen CD-ROM und dem Datenverarbeitungsgerät;
- Fig. 7a, 7b, 7c: zeigen jeweils einen Ausschnitt der CD-ROM in Aufsicht für unterschiedliche Ausführungsformen eines optischen CD-Kopplungselements;
- Fig. 8: zeigt einen Ausschnitt der CD-ROM mit einem optischen CD-Kopplungselement, dem ein optisches Hilfselement vorgeschaltet ist.

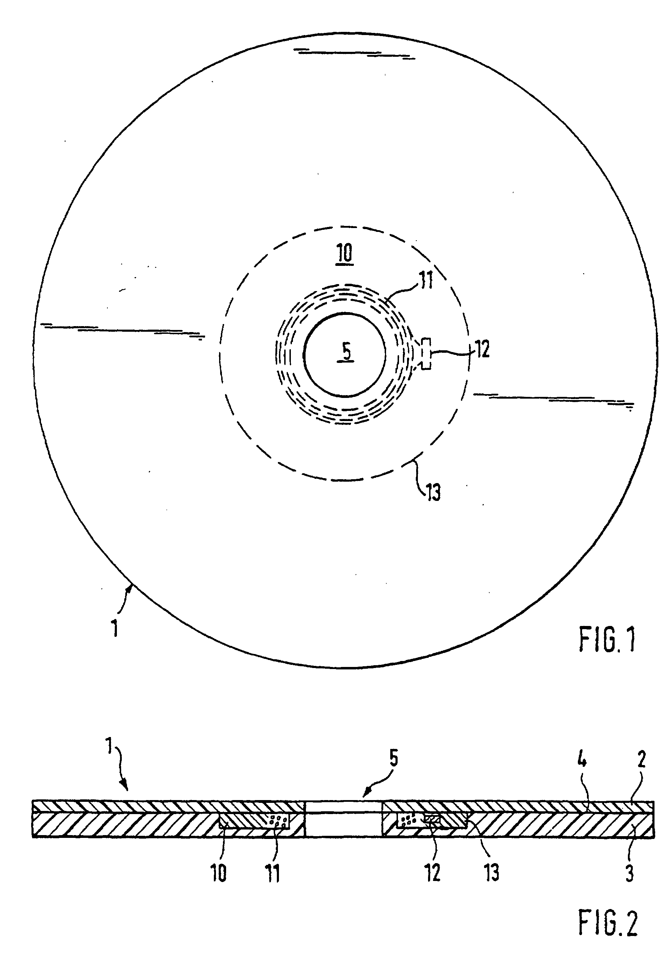

Fig. 1 und Fig. 2 zeigen eine Ausführungsform der erfindungsgemäßen CD-ROM. Der CD-Körper 1 besteht im wesentlichen aus drei Schichten, nämlich einer informationstragenden Schicht 3, einer auf der informationstragenden Seite der Schicht 3 aufgedampften, üblicherweise aus Aluminium bestehenden Metallschicht 4 und einer darüber angeordneten Schutzlackschicht 2, durch die die Metallschicht 4 gegen äußere Einflüsse versiegelt ist. In der Mitte der CD befindet sich das CD-Mittelloch 5, in das ein motorseitiges und ein lagerseitiges Andruckplättchen eines CD-Laufwerks eingreifen können. Wie sich aus Fig. 2 ergibt, ist in der informationstragenden Schicht 3 zentral um das CD-Mittelloch 5 herum ein ringförmiges Modul 10 angeordnet, das in eine Aussparung 13 des CD-Körpers 1 genau eingepaßt ist. In dem Modul 10 sind in der dargestellten Ausführungsform ein als Spule ausgeführtes CD-Kopplungselement 11 und ein Chip 12 eingelagert. Zur Erhöhung der Stabilität kann die Aussparung 13 durch einen schmalen Steg vom Mittelloch 5 getrennt sein.

Die Herstellung erfolgt folgendermaßen: Zunächst wird die informationstragende Schicht 3 aus Kunststoff spritzgegossen. Die Aussparung 13 und das Mittelloch 5 werden vorzugsweise direkt mitangespritzt, können aber auch in einem nachgeschalteten Prozeß ausgefräst werden. Das Modul 10 kann in Form eines vorgefertigten Rings aus gegossenem Harz in die Aussparung 13 eingesetzt werden und mittels eines Klebers oder eines Lacks oder auch thermisch mit der informationstragenden Schicht 3 dauerhaft verbunden werden. Die Metallschicht 4 wird dann auf die informationstragende Schicht 3 und das Modul 10 aufgedampft. Anschließend wird die Schutzlackschicht 2 aufgetragen.

Bei dem oben beschriebenen Herstellungsverfahren sind die Maße der Aussparung 13 und die Modulmaße bezüglich des Innen- und des Außenrandes der Aussparung 13 insofern kritisch, als sichergestellt sein muß, daß das Modul 10 eine exakt zentrale Lage einnimmt. Die Dicke des Moduls 10 ist weniger kritisch, da Toleranzen durch die darüber angeordnete Schutzlackschicht 2 ausgeglichen werden. Es ist übrigens nicht erforderlich, daß die aufgedampfte Metallschicht 4 das Modul 10 überzieht, da die CD-ROM 1 in diesem Bereich keine Informationsspuren besitzt. Allerdings kann die Metallschicht 4 in diesem Bereich die Funktion des CD-Kopplungselementes 11 übernehmen und beispielsweise in Form einer Spule ausgebildet sein, die von der übrigen Metallschicht 4 elektrisch getrennt ist und mit dem in dem Modul 10 eingelagerten Chip 12 auf geeignete Weise leitend verbunden ist. In der in Fig. 1 und Fig. 2 gezeigten Ausführungsform ist das CD-Kopplungselement 11 jedoch als gewickelte Spule zusammen mit dem Chip 12 in dem Modul 10 integriert.

Neben der oben beschriebenen Herstellungsweise der CD-ROM 1 mit integriertem Modul 10 kann das Modul 10 auch auf eine zweite Weise in den CD-Körper integriert werden. Danach wird das Modul 10 in die Spritzgußform der informationstragenden Schicht 3 eingelegt und anschließend wird das Material für die informationstragende Schicht 3 eingespritzt. Bei diesem Verfahren ist keines der Außenmaße des Moduls 10 besonders kritisch, da alle Maßungenauigkeiten durch das eingespritzte Material der informationstragenden Schicht 3 ausgeglichen werden. Lediglich bei einer Ausführungsform, bei der die Aussparung 13 der CD-ROM 1 nicht durch einen Steg vom Mittelloch 5 getrennt ist, ist die Mittelbohrung des Moduls 10, durch die sich das Modul automatisch in der Spritzgußform selbstzentriert, sehr genau auszuführen. Statt des Moduls 10 kann auch ein Rohling in die Spritzgußform eingelegt werden, der aus einem Chip und einer Spule sowie einem Material zu deren Stabilisierung besteht.

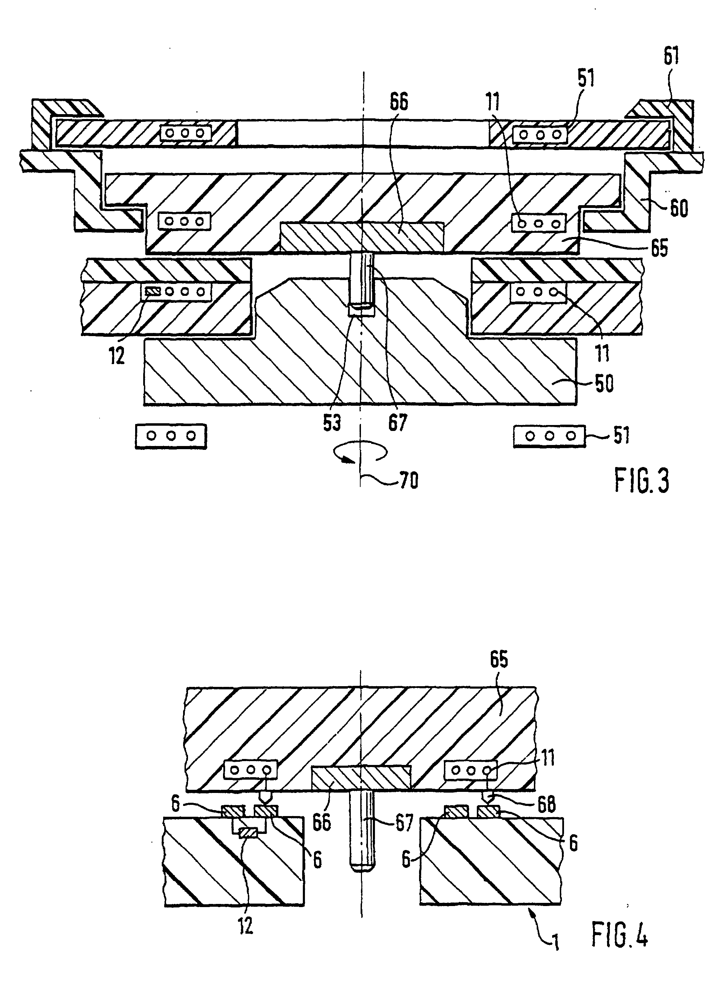

In Fig. 3 ist beispielhaft dargestellt, wie die CD-ROM 1 in einem CD-Laufwerk zwischen dem motorseitigen Andruckplättchen 50 und dem lagerseitigem Andruckplättchen 65 eingeklemmt sein kann, wobei die CD inclusive der beiden Andruckplättchen 50 und 65 um eine Achse 70 drehbar ist. Das motorseitige Andruckplättchen 50 wird von einem nicht dargestellten Elektromotor angetrieben. Der Anpreßdruck, durch den die CD-ROM 1 zwischen den Andruckplättchen 50 und 65 eingeklemmt wird, kann durch einen im lagerseitigen Andruckplättchen 65 integrierten ringförmigen Permanentmagneten 66 erzeugt werden, der auf das gegenüberliegende motorseitige Andruckplättchen 50 eine magnetische Anziehungskraft ausübt. Das lagerseitige Andruckplättchen 65 weist in seinem Zentrum einen stiftförmigen Vorsprung 67 auf, der in eine Vertiefung 53 des motorseitigen Andruckplättchens 50 eingreift und so das lagerseitige Andruckplättchen 65 zentriert. Das lagerseitige Andruckplättchen 65 ist in einer Führungsplatte 60 drehbar gelagert. Die Peripherie des CD-Laufwerks ist der Einfachheit halber nicht dargestellt.

Das Laufwerk-Kopplungselement 51 besteht beispielsweise aus einer Spule, die in einem Ring aus Kunstharz eingegossen ist, und ist oberhalb des lagerseitigen Andruckplättchens 65 angeordnet und über einen Vorsprung 61 an der Führungsplatte 60 befestigt oder mittels eines Klebers mit der Führungsplatte 60 verklebt. Ein flexibles Anschlußkabel wird vom Laufwerk-Kopplungselement 51 aus der Führungsplatte 60 herausgeführt und nahe einer der Gehäuseseiten des CD-Laufwerks an der Mechanik des CD-Laufwerks vorbeigeführt und mit einem Stecker auf eine Platine gesteckt, von der die Daten weitergeleitet werden (nicht dargestellt). Prinzipiell kann das Laufwerk-Kopplungselement 51 auch unterhalb des motorseitigen Andruckplättchens 50 angeordnet sein. Diese Position wird aber aus Platzgründen in der Regel ungünstiger sein, da hier auch noch der Elektromotor zum Antrieb der CD-ROM 1 untergebracht ist.

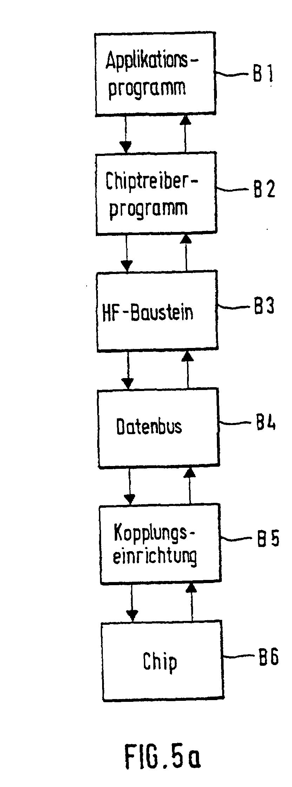

Für die Anordnung des CD-Kopplungselements 11 sind in Fig. 3 ebenfalls zwei Alternativen dargestellt. Das CD-Kopplungselement 11 kann entweder im Modul 10 der CD-ROM integriert sein oder im lagerseitigen Andruckplättchen 65 integriert sein. Im letztgenannten Fall wird eine elektrisch leitende Verbindung zwischen dem Chip 12 der CD-ROM 1 und dem CD-Kopplungselement 11 über Kontakte 68 auf der Stirnseite des lagerseitigen Andruckplättchens 65 und entsprechende Kontaktflächen 6 auf der Oberseite der CD-ROM 1 hergestellt. Die Kontaktierung zwischen der CD-ROM 1 und dem lagerseitigen Andruckplättchen 65 ist im einzelnen in Fig. 4 dargestellt.

Fig. 4 zeigt einen Ausschnitt der CD-ROM 1 und des darauf aufgesetzten lagerseitigen Andruckplättchens 65 in Schnittdarstellung. Auf der Oberseite der CD-ROM 1 sind zwei ringförmige Kontaktflächen 6, die mit dem Chip 12 elektrisch leitend verbunden sind, in einer konzentrischen Anordnung aufgebracht. Die Unterseite des lagerseitigen Andruckplättchens 65 weist Kontakte 68 auf, die mit dem CD-Kopplungslement 11 verbunden sind und durch den mit dem Permanentmagneten 66 erzeugten Anpreßdruck gegen die Kontaktflächen 6 gepreßt werden.

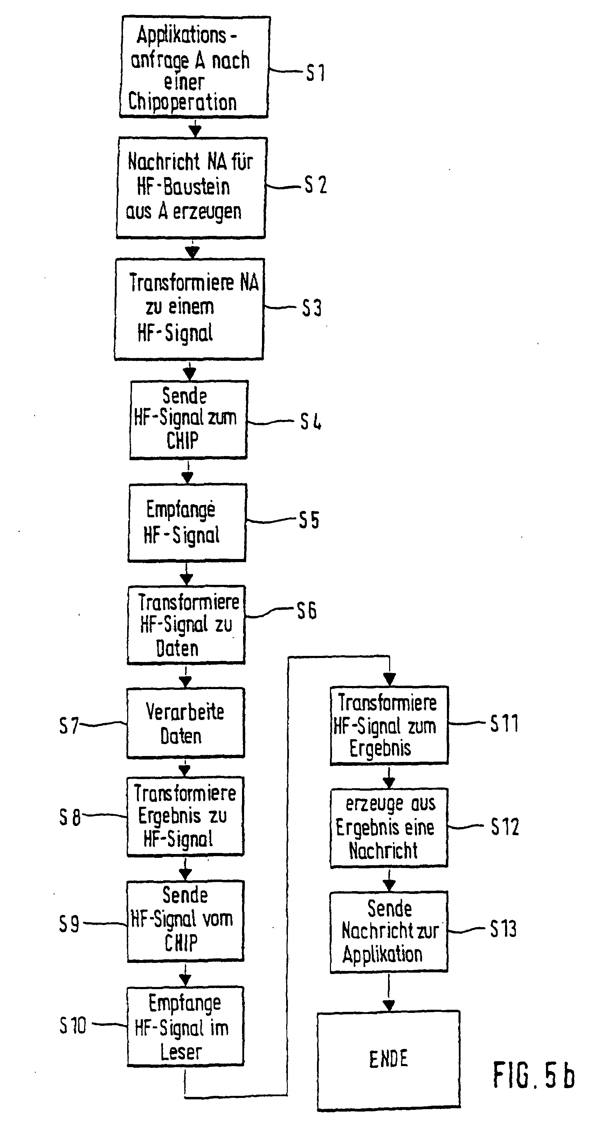

In den Fig. 5a und 5b ist die Kommunikation zwischen einem Datenverarbeitungsgerät und einem in die CD-ROM 1 integrierten Chip 12 für den Fall dargestellt, daß die Kommunikation mit dem Chip 12 und die Kommunikation mit der CD-Ausleseeinrichtung, die die auf der CD aufgebrachten Informationen liest, über getrennte Schnittstellen erfolgt.

Fig. 5a zeigt schematisch die an der Kommunikation beteiligten Elemente. Das Applikationsprogramm, das mit dem Chip 12 kommunizieren möchte, ist durch einen Block B1 dargestellt. Das Applikationsprogramm B1 steht in Verbindung mit einem Chiptreiberprogramm B2, das wiederum auf einen Hochfrequenz-(HF)-Baustein B3 zugreifen kann. Über einen Datenbus bzw. eine Leitung B4 ist der HF-Baustein B3 mit einer Kopplungseinrichtung B5 verbunden. Die Anordnung von HF-Baustein B3 und Datenbus B4 kann auch vertauscht sein. Die Kopplungseinrichtung B5 besteht aus dem Laufwerk-Kopplungselement 51 und aus dem CD-Kopplungselement 11. Je nach Ausführungsform können auch noch Kontaktflächen 6 auf der CD-ROM 1 und Kontakte 68 auf dem lagerseitigen Andruckplättchen 65 hinzukommen. Die Kopplungseinrichtung B5 ist wiederum mit dem Chip 12 der CD-ROM 1 verbunden, der in Fig. 5a schematisch durch einen Block B6 dargestellt ist.

Fig. 5b zeigt ein Flußdiagramm zur Veranschaulichung der Funktionsabläufe bei der Kommunikation zwischen dem Datenverarbeitungsgerät und dem in der CD-ROM 1 integrierten Chip 12. Bei der Erläuterung des Flußdiagramms wird jeweils auf das in Fig. 5a dargestellte Blockschaltbild Bezug genommen. In einem ersten Schritt S1 wird festgestellt, daß seitens des Applikationsprogramms B1 eine Anfrage A nach einer Chipoperation vorliegt. An Schritt S1 schließt sich ein Schritt S2 an, in dem mittels des Chiptreiberprogramms B2 aus der Anfrage A eine Nachricht NA für den HF-Baustein B3 erzeugt wird. Anschließend wird in einem Schritt S3 die Nachricht NA durch den HF-Baustein B3 in ein HF-Signal umgewandelt. Im darauffolgenden Schritt S4 wird das HF-Signal über die Kopplungseinrichtung B5 dem Chip 12 bzw. Block B6 übermittelt. In einem Schritt S5 empfängt der Chip 12 bzw. Block B6 das HF-Signal und transformiert es anschließend in einem Schritt S6 in ein Datensignal. Das so erzeugte Datensignal wird von dem Chip 12 bzw. Block B6 in einem Schritt S7 verarbeitet und in einem Schritt S8 wird das Ergebnis der Verarbeitung in ein HF-Signal transformiert. Das HF-Signal wird in Schritten S9 und S10 über die Kopplungseinrichtung B5 kontaktlos übertragen. In einem darauffolgenden Schritt S11 wird das HF-Signal vom HF-Baustein B3 in ein Datensignal umgewandelt. In einem Schritt S12 wird vom Chiptreiberprogramm B2 aus dem Datensignal eine Nachricht erzeugt, die in einem Schritt S13 dem Applikationsprogramm B1 übermittelt wird. Damit ist die Anfrage des Applikationsprogramms B1 an den Chip 12 bzw. Block B6 beantwortet.

Der Inhalt der Anfrage A des Applikationsprogramms hängt davon ab, für welche Anwendung der Chip 12 eingesetzt wird und wie der Chip 12 in die Realisierung dieser Anwendung einbezogen ist.

Eine mögliche Anwendung besteht beispielsweise in einem Zugriffs-/ bzw. Ausführungsschutz der auf der CD-ROM 1 gespeicherten Informationen oder Programme. In diesem Fall kann die Anfrage A ein Kennwort betreffen, das für eine Fortsetzung des Programmverlaufs bzw. für das Abrufen von Informationen erforderlich ist oder auch eine Sprungadresse, an der das Programm fortgesetzt werden soll. Ebenso kann die Anfrage A einen Schlüssel oder einen Algorithmus betreffen, der zur Entschlüsselung des verschlüsselt abgelegten Programmcodes bzw. der in verschlüsselter Form gespeicherten Informationen erforderlich ist. In diesem Zusammenhang kann die Anfrage A auch eine Aufforderung an den Chip 12 darstellen, den Programmcode bzw. die Informationen zu entschlüsseln oder den Programmcode wenigstens teilweise auszuführen. Die Ausführung der Anfrage A kann von einem erfolgreichen Ausgang einer damit oder zuvor durchgeführten Authentifizierung abhängig gemacht werden.

Allen bislang aufgezählten Anwendungen ist gemeinsam, daß der Chip 12 als Sicherheitselement und die CD-ROM 1 als Massenspeichermedium eine Einheit bilden und somit keine Probleme bei der Zuordnung des jeweiligen Sicherheitselements zum dazugehörigen Massenspeichermedium auftreten und ein Verlust des Sicherheitselements nicht möglich ist, solange man im Besitz des Massenspeichermediums ist. Ein unrechtmäßiges Kopieren oder Vervielfältigen der gesamten Einheit ist extrem schwierig und damit unrentabel.

Der Chip 12 kann auch als Abrechnungsmedium für die auf der CD-ROM 1 gespeicherten Programme oder Informationen eingesetzt werden. Hierzu ist auf dem Chip 12 ein Betrag gespeichert, der bezüglich der auf der CD-ROM 1 gespeicherten Programme oder Informationen eine vorbestimmte Anzahl von Ausführungen oder Zugriffen oder das Herunterladen einer vorbestimmten Datenmenge oder beliebig häufige Ausführungen von ausgewählten Programmen bzw. beliebig häufigen Zugriff auf ausgewählte Informationen jeweils im Gegenwert des gespeicherten Betrags zuläßt. Der Betrag kann beispielsweise mit dem Kaufpreis der CD-ROM 1 entrichtet werden oder als eine Gebühr für eine geliehene CD-ROM 1. Weiterhin kann der Betrag durch spätere Zahlungen erhöht werden bzw. ein ganz oder teilweise verbrauchte Betrag durch Zahlungen wieder hergestellt werden. Der Betrag kann auch auf einem Kassenchip gespeichert sein, der nach Eingang der Bezahlung den CD-Chip Anweisung zum Freischalten der Information bzw. des Programms gibt.

In einer weiteren Anwendung sind auf dem Chip 12 Informationen gespeichert, die mittels der Anfrage A abgerufen oder geändert werden können. Derartige Informationen können beispielsweise persönliche Einstellungen für das auf der CD-ROM gespeicherte Programm sein oder Zwischenergebnisse von mit dem Programm durchgeführten Berechnungen oder Spielstände, wenn es sich um ein Spielprogramm handelt.

In einer anderen Anwendung wird der Chip 12 durch die Anfrage A veranlaßt, Berechnungen durchzuführen, wie beispielsweise das Erzeugen einer Zufallszahl oder einer digitalen Signatur oder das Prüfen einer Kennung.

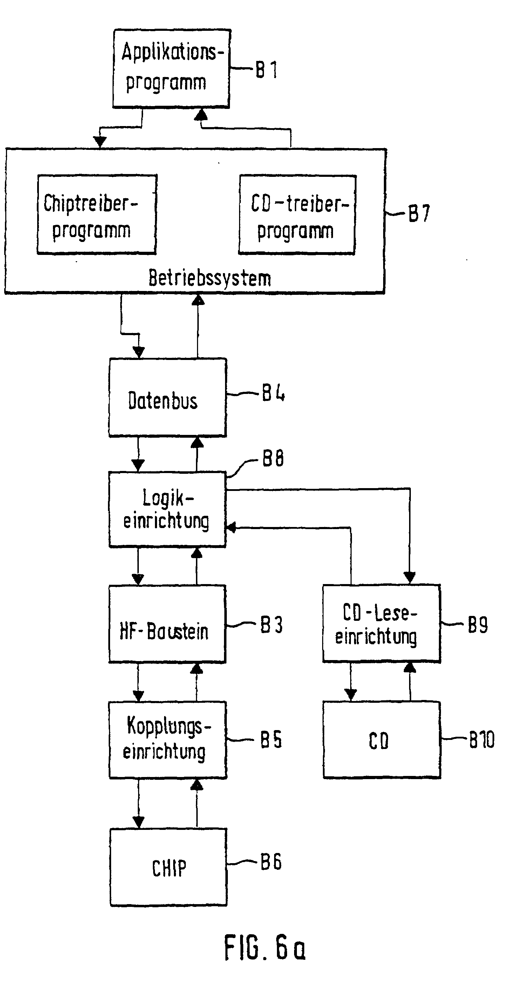

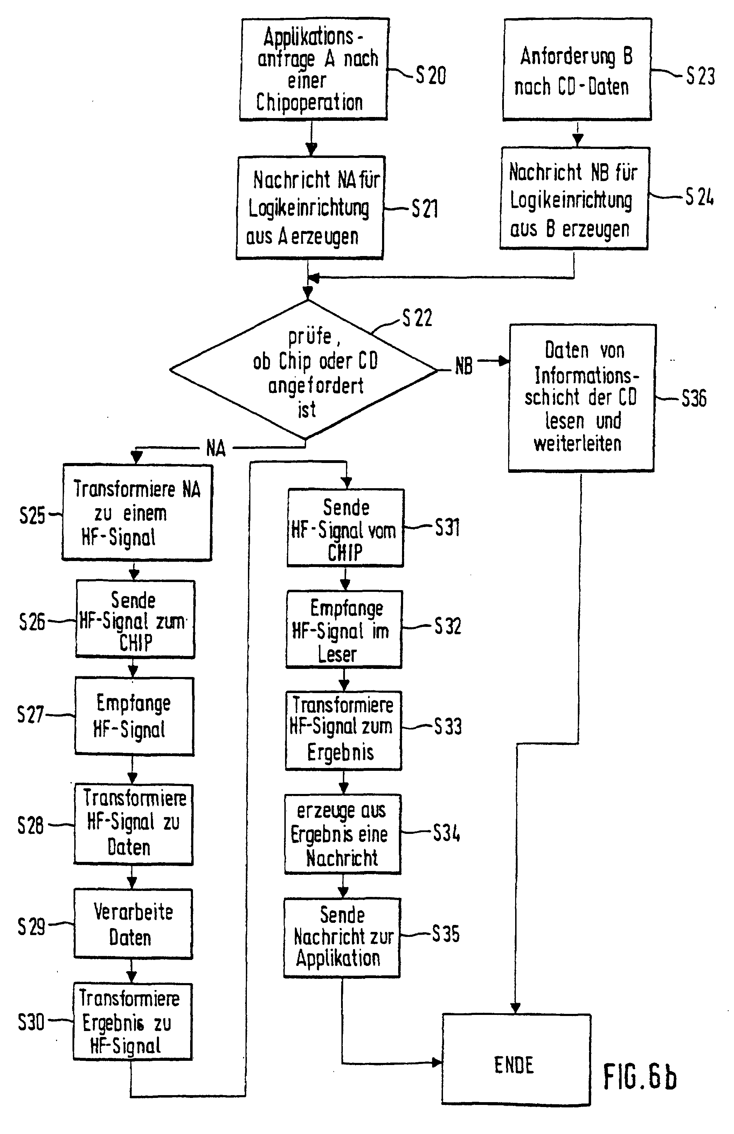

In den Fig. 6a und 6b ist eine zweite Ausführungsmöglichkeit zur Kommunikation zwischen dem Datenverarbeitungsgerät und dem in der CD-ROM 1 integrierten Chip 12 dargestellt. In diesem Falle sind die CD-Ausleseeinrichtung B9 und die Kopplungseinrichtung B5 über einen gemeinsamen CD-Datenbus B4 (z. B. einen SCSI-Bus oder ISA-Bus) mit dem Datenverarbeitungsgerät verbunden, d. h. es ist nur eine Schnittstelle für die Kommunikation mit dem Chip 12 bzw. Block B6 und der CD-Ausleseeinrichtung B9 vorhanden. Erst innerhalb des CD-Laufwerks verzweigt sich der CD-Datenbus B4 in einer Logikeinrichtung B8. In dieser Logikeinrichtung B8 werden alle mit dem CD-Datenbus B4 verschickten Signale daraufhin geprüft, ob es sich um Kommunikationssignale für den CD-ROM-Chip 12 (Block B6) oder um Signale für die CD-Ausleseeinrichtung B9 handelt. Die Adressen der Kommunikationssignale für den Chip 12 (Block B6) entsprechen solchen CD-ROM-Adressen, die auf der CD-ROM 1 (Block B10) nicht realisiert sind. Die für den Chip 12 (Block B6) bestimmten Adressen werden dann von der Logikeinrichtung B8 an den HF-Baustein B3 weitergeleitet. Bei dieser Ausführungsform sind also die Logikeinrichtung B8 und der HF-Baustein B3 als separate Bauteile in dem CD-Laufwerk untergebracht.

Im einzelnen ist das Applikationsprogramm B1 über ein Betriebssystem B7, das ein Chiptreiberprogramm und ein CD-Treiberprogramm umfaßt, an den Datenbus B4 gekoppelt. Der Datenbus B4 führt zur Logikeinrichtung B8 und von dort einerseits über den HF-Baustein B3 und die Kopplungseinrichtung B5 zum Chip 12 bzw. Block B6 und andererseits über die CD-Ausleseeinrichtung B9 zur CD-ROM 1 bzw. Block B10.

In einer Variante, bei der die Kommunikation zwischen dem Datenverarbeitungsgerät und dem in der CD-ROM 1 integrierten Chip 12 (Block KB 6) mit Hilfe der CD-Ausleseeinrichtung B9 durchgeführt wird, entfällt der in Fig. 6a für die Ankopplung an den Chip B6 vorgesehene Zweig. D.h., der HF-Baustein B3 und die Kopplungseinrichtung B5 werden nicht benötigt. Die Funktionsweise der Logikeinrichtung B8 ist insofern abgewandelt, als sie in jedem Fall die CD-Leseeinrichtung B9 ansteuert. Die Art der Ansteuerung hängt jedoch davon ab, ob mit der CD B10 oder mit dem Chip B6 kommuniziert werden soll. Abhängig davon wird die CD-Ausleseeinrichtung B9 so gesteuert, daß sie mit der CD B10 oder mit dem Chip B9 Kontakt aufnimmt. Die hier geschilderte Variante setzt voraus, daß ein Datenaustausch mit dem Chip B9 auf optischem Wege möglich ist. Eine Reihe von Ausführungsbeispielen der CD B10, die eine optische Kommunikation mit dem Chip B6 ermöglichen, wird im folgenden noch näher beschrieben. Bei allen Ausführungsbeispielen mit einer optischen Kopplung des Chips B9 ist es prinzipiell möglich, statt eines herkömmlichen Chips mit elektrischer Signalverarbeitung einen Chip mit optischer Signalverarbeitung zu verwenden. Dies hängt im wesentlichen auch davon ab, welche Fortschritte in Zukunft bei der Entwicklung optischer Chips gemacht werden.

Fig 6 b zeigt ein Flußdiagramm zur Veranschaulichung der Funktionsabläufe bei der Kommunikation zwischen dem Datenverarbeitungsgerät und dem in der CD-ROM 1 integrierten Chip 12 bzw. der CD-Ausleseeinrichtung. In der folgenden Beschreibung wird auf das in Fig. 6 a dargestellte Blockschaltbild Bezug genommen. In einen ersten Schritt S20 wird seitens des Applikationsprogramms B1 eine Anfrage A nach einer Chipoperation abgesetzt. In dem sich anschließenden Schritt S21 erzeugt das Chiptreiberprogramm (Block B7) aus der Anfrage A eine Nachricht NA, die über den Datenbus B4 an die Logikeinrichtung B8 weitergeleitet wird. An Schritt S21 schließt sich eine Abfrage S22 an, in der die Logikeinrichtung B8 prüft, ob eine Kommunikation mit dem Chip 12 (Block B6) oder mit der CD-ROM 1 (Block B10) gewünscht wird, d. h. ob die Nachricht NA vorliegt oder eine Nachricht NB. Die Nachricht NB wird in einem Schritt S 24 vom CD-Treiberprogramm erzeugt, wenn in einem vorhergehenden Schritt S 23 eine Anforderung B nach CD-Daten abgesetzt wird. Die Unterscheidung zwischen der Nachricht NA und der Nachricht NB kann beispielsweise anhand der Adressierung erfolgen.

Falls die Abfrage in Schritt S22 ergibt, daß eine Nachricht NA für den Chip 12 bzw. Block B6 vorliegt, schließt sich ein Schritt S25 an, in dem das Signal NA von dem HF-Baustein B3 in ein HF-Signal transformiert wird. Im darauffolgenden Schritt S26 wird das HF-Signal mit der Kopplungseinrichtung B5 zum Chip 12 bzw. Block B6 gesandt. In einem Schritt S27 empfängt der Chip 12 bzw. Block B6 das HF-Signal und transformiert es im folgenden Schritt S28 zu Daten, die in einem Schritt S29 weiterverarbeitet werden. Das Ergebnis der Weiterverarbeitung wird in einem Schritt S30 in ein HF-Signal transformiert und anschließend in Schritten S31 und S32 durch die Kopplungseinrichtung B5 übermittelt. In Schritt S33 transformiert der HF-Baustein B3 das HF-Signal in ein Datensignal. Das Datensignal wird in einem Schritt S34 vom Chiptreiberprogramm (Block B 7) in eine Nachricht umgewandelt und in einem Schritt S35 an das Applikationsprogramm B1 übermittelt. Mit Schritt S35 ist die Anfrage A des Applikationsprogramms B1 beantwortet und der Durchlauf des Flußdiagramms beendet.

Wird in der Abfrage S22 festgestellt, daß eine Nachricht NB vorliegt, die eine Anforderung B nach CD-Daten ausdrückt, so schließt sich an die Anfrage S22 ein Schritt S36 an, in dem die CD-Ausleseeinrichtung B9 die gewünschten Daten von der CD-ROM 1 bzw. Block B10 ausliest und an das Applikationsprogramm B1 übermittelt. Mit Schritt S36 wurde der Anforderung B nach CD-Daten entsprochen, so daß der Durchlauf des Flußdiagramms beendet ist.

Es ist in der in Fig. 6a und 6b dargestellten Variante möglich, die erfindungsgemäße CD-ROM 1 mit integriertem Chip 12 in bereits existierenden CD-Laufwerken abzuspielen. Dazu braucht lediglich eine zusätzliche PC-Einsteckkarte in den PC eingesteckt zu werden und ein Laufwerk-Kopplungselement 51 sowie eine Verbindung zwischen Laufwerk-Kopplungselement 51 und der PC-Einsteckkarte in dem CD-Laufwerk angeordnet zu werden. Außerdem muß ein entsprechendes Chiptreiberprogramm eingeladen werden. Im Falle einer optischen Kopplung des Chips 12 über die CD-Ausleseeinrichtung kann das Laufwerk-Kopplungselement 51 entfallen, da dessen Funktion von der CD-Ausleseeinrichtung übernommen werden kann.

Das CD-Kopplungselement 11 kann im Falle einer optischen Kopplung des Chips 12 auf verschiedene Weise ausgeführt sein. So kann das CD-Kopplungselement 11 beispielsweise so ausgeführt sein, daß es das für die Kopplung verwendete Licht direkt empfängt und - falls ein elektrischer Chip 12 zum Einsatz kommt - in entsprechende elektrische Signale umwandelt, die dem Chip 12 zugeleitet werden. Falls ein optischer Chip 12 verwendet wird, entfällt die Umwandlung in elektrische Signale. Ähnlich wie der Empfang kann auch die Aussendung von Licht ebenfalls direkt vom CD-Kopplungselement 11 durchgeführt werden. Das CD-Kopplungselement 11 kann integraler Bestandteil des Chips 12 sein oder als separates Bauteil vorzugsweise im inneren Bereich der CD-ROM 1 angeordnet sein.

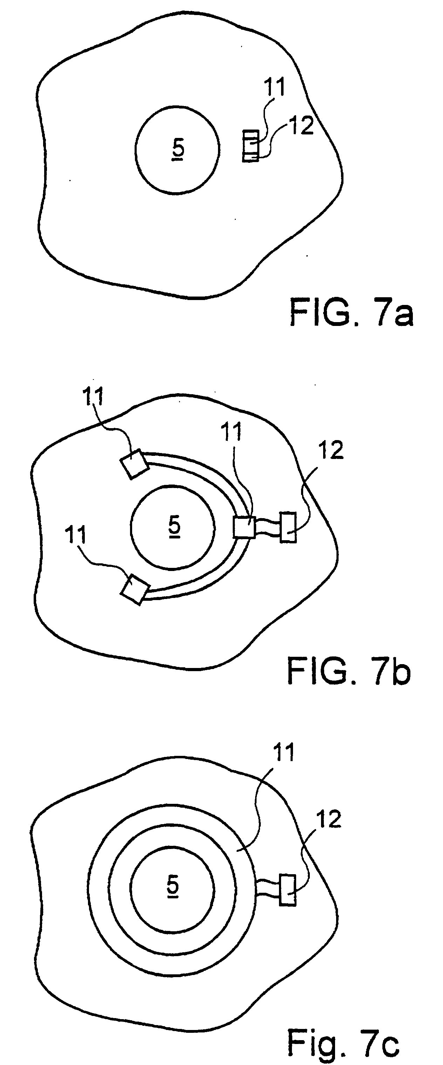

Drei Ausführungsformen für das CD-Kopplungselement 11 für den Fall einer direkten optischen Kopplung sind in Fig. 7 dargestellt. Es ist jeweils der innere Bereich der CD-ROM 1, in dem das CD-Kopplungselement 11 angeordnet ist, in Aufsicht dargestellt.

Fig. 7a zeigt ein CD-Kopplungselement 11, das als integraler Bestandteil des Chips 12 ausgeführt ist. Diese Ausführungsform ist sehr kompakt und läßt sich leicht in die CD-ROM 1 einbauen. Es ist jedoch darauf zu achten, daß das CD-Kopplungselement 11 an der Oberfläche der CD-ROM 1 angeordnet ist oder von lichtdurchlässigem Material abgedeckt ist. Weiterhin ist beim Betrieb der CD-ROM 1 sicherzustellen, daß die Datenübertragung zwischen dem CD-Kopplungselement 11 und der CD-Ausleseeinrichtung in einem mit der Drehbewegung der CD-ROM 1 synchronisierten Zeitraster erfolgt, da das CD-Kopplungselement 11 bei jeder Umdrehung der CD-ROM 1 nur für eine kurze Zeitspanne in Sichtkontakt mit der empfindlichen Fläche der CD-Ausleseeinrichtung 11 steht.

Fig. 7 b zeigt als eigene Bauteile separat auf der CD-ROM 1 angeordnete Kopplungselemente 11. Es sind beispielhaft drei CD-Kopplungselemente 11 dargestellt, die auf einem gleichen Radius und äquidistant zueinander angeordnet sind. Wenn man mehrere CD-Kopplungselemente 11 verwendet, verkürzen sich die Lücken im Zeitraster, während denen eine Datenübertragung nicht möglich ist. Die Länge der Lücken hängt unter anderem vom Radius, auf dem die CD-Kopplungselemente 11 angeordnet sind, von der Drehbewegung der CD-ROM 1 sowie von der Anzahl und Größe der CD-Kopplungselemente 11 ab. Je nach den Erfordernissen des Einzelfalles wird man daher entweder ein CD-Kopplungselement 11 oder mehrere CD-Kopplungselemente 11 auf der CD-ROM 1 anbringen.

Fig. 7c zeigt ein großflächiges CD-Kopplungselement 11, das die Form einer Kreisscheibe besitzt. Die in Fig. 7c dargestellte Ausführungsform des CD-Kopplungselements 11 ermöglicht eine kontinuierliche Datenübertragung ohne Unterbrechung.

Neben der direkten Übertragung des Lichts zum bzw. vom CD-Kopplungselement 11 besteht auch die Möglichkeit, das Licht dem CD-Kopplungselement 11 mittels eines optischen Hilfselements 14 zuzuleiten bzw. das vom CD-Kopplungselement 11 ausgesandte Licht mittels des optischen Hilfselements 14 weiterzuleiten. Auf diese Weise ist es beispielsweise möglich, das CD-Kopplungselement 11 als integralen Bestandteil des Chips auszubilden und dennoch eine kontinuierliche Datenübertragung zum Chip 12 zu ermöglichen. Dies läßt sich dadurch erreichen, daß das von der CD-Ausleseeinrichtung emittierte Licht vom großflächig ausgeführten optischen Hilfselement 14 empfangen und dem CD-Kopplungselement 11 zugeführt wird. Weiterhin ermöglicht der Einsatz des optischen Hilfselements 14 eine Einbettung des CD-Kopplungselements 11 in die CD-ROM 1, ohne daß dabei Rücksicht auf eine direkte Sichtverbindung zur CD-Ausleseeinrichtung genommen werden muß, da die Weiterleitung des Lichts über das optische Hilfselement 14 erfolgt.

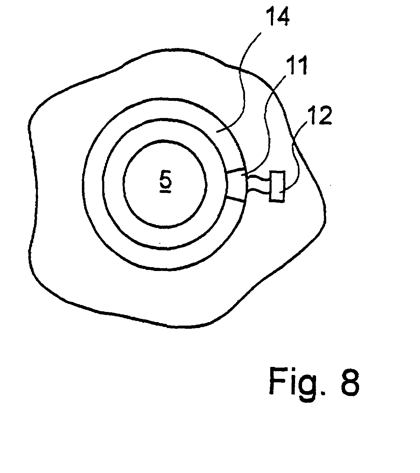

Eine Ausführungsform mit einem optischen Hilfselement 14 ist in Fig. 8 dargestellt. Das optische Hilfselement 14 ist hier als optische Folie ausgeführt, die die Form einer Kreisscheibe hat und auf die Oberfläche der CD-ROM 1 aufgebracht ist bzw. in die Oberfläche integriert ist. Das CD-Kopplungselement 11 ist als ein Segment in die Kreisscheibe eingefügt, so daß eine Weiterleitung des vom optischen Hilfselement 14 gesammelten Lichts an das CD-Kopplungselement 11 problemlos möglich ist. Je nach Anwendung kann das optische Hilfselement 14 auch anders geformt sein und es können auch mehrere optische Hilfselemente 14 eingesetzt werden.

Bei allen Ausführungsformen für eine optische Kopplung des Chips 12 kann das Licht entweder von ein und demselben CD-Kopplungselement 11 und gegebenenfalls über das optische Hilfselement 14 gesendet und empfangen werden oder es können unterschiedliche CD-Kopplungselemente 11 bzw. verschiedene Bereiche des CD-Kopplungselements 11 sowie gegebenenfalls optische Hilfselemente 14 für das Senden und das Empfangen des Lichts eingesetzt werden. So könnte das in Fig. 7c dargestellte Ausführungsbeispiel so abgewandelt werden, daß das ringförmige CD-Kopplungselement 11 Ringsegmente für den Empfang von Licht und Ringsegmente für das Senden von Licht aufweist. Eine weitere Abwandlung könnte so gestaltet sein, daß das CD-Kopplungselement 11 aus mehreren konzentrischen Ringen besteht, wobei wenigstens ein Ring für das Senden von Licht ausgelegt ist und wenigstens ein Ring für das Empfangen von Licht.

Die Art der technischen Realisierung des CD-Kopplungselements 11 hängt von Faktoren ab, wie gewünschte Datenübertragungsrate, geforderte Zuverlässigkeit und Lebensdauer, zulässiger Preis usw. Für den Empfang des Lichtes eigenen sich beispielsweise Fotodioden bzw. Fototransistoren, Infrarotsensoren, Solarzellen usw. Für das Aussenden von Licht eignen sich beispielsweise elektrisch anregbare Elemente, wie Leuchtdioden, optisch anregbare Elemente oder Elemente, deren Reflexionsverhalten steuerbar ist, wie Flüssigkristallanzeigen.

Falls gleichzeitig ein Datenaustausch mit der CD-ROM 1 und mit dem Chip 12 erfolgen soll, empfiehlt es sich, auch im Falle eines optischen CD-Kopplungselementes 11 den Datenaustausch mit dem Chip 12 nicht über die CD-Ausleseeinrichtung, sondern über eine separate Einrichtung vorzunehmen. Diese separate Einrichtung kann auf der Vorderseite, der Rückseite oder auf beiden Seiten der CD-ROM 1 angeordnet sein. Entsprechend ist dann auch das CD-Kopplungselement 11 bzw. das optische Hilfselement 14 anzuordnen.

In den hier beschriebenen CD-Laufwerken sind auch herkömmliche CD-ROMs abspielbar, d. h. die Laufwerke sind abwärtskompatibel. Ebenso können CD-ROMs 1 mit Chip 12 bei Anwendungen, die keinen Zugriff auf den Chip erfordern, auch mit herkömmlichen Laufwerken abgespielt werden.

## Patentansprüche

1. Datenträger in Form einer CD (1), umfassend einen kreisförmigen CD-Körper mit einer informationstragenden Schicht (3), wobei in die CD (1) ein Chip (12) integriert ist, **dadurch gekennzeichnet, daß** in die CD (1) weiterhin ein CD-Kopplungselement (11) zur kontaktlosen Übertragung von Daten zwischen dem Chip (12) und einem Datenverarbeitungsgerät integriert ist.

2. CD gemäß Anspruch 1, **dadurch gekennzeichnet, daß** der Chip (12) und das CD-Kopplungselement (11) zwischen einem Mittelloch (5) der CD (1) und einer innersten Informationsspur angeordnet sind.

3. CD gemäß einem der Ansprüche 1 bis 2, **dadurch gekennzeichnet, daß** der Chip (12) und das CD-Kopplungselement (11) mittels eines Harzes zu einem Modul (10) vergossen sind.

4. CD gemäß Anspruch 3, **dadurch gekennzeichnet, daß** der CD-Körper eine Aussparung (13) aufweist, in der das Modul (10) eingesetzt ist.

5. CD gemäß Anspruch 3, **dadurch gekennzeichnet, daß** das Modul (10) von umgebendem Material des CD-Körpers umspritzt ist.

6. System, umfassend einen Datenträger in Form einer CD (1) und ein CD-Laufwerk, wobei die CD (1), einen kreisförmigen CD-Körper mit einer informationstragenden Schicht (3) aufweist, und wobei in die CD (1) ein Chip (12) integriert ist, **dadurch gekennzeichnet, daß** auf der Oberfläche der CD (1) Kontaktflächen (6) aufgebracht sind, die von einem Andruckplättchen (65) kontaktiert werden, wobei das Andruckplättchen (65) Bestandteil des CD-Laufwerks ist, sich mit der CD (1) mitdreht und ein CD-Kopplungselement (11) zur kontaktlosen Übertragung von Daten zu bzw. von einem Datenverarbeitungsgerät aufweist.

7. CD gemäß einem der Ansprüche 1 bis 6, **dadurch gekennzeichnet, daß** auf dem Chip (12) Daten gespeichert sind und gegebenenfalls Daten verarbeitet werden können, ohne die keine oder keine korrekte Bearbeitung der auf der CD (1) gespeicherten Informationen möglich ist.

8. CD gemäß Anspruch 7, **dadurch gekennzeichnet, daß** die gespeicherten Daten Schlüssel oder Algorithmen zur Entschlüsselung der auf der CD (1) speicherten Informationen sind.

9. CD gemäß einem der Ansprüche 1 bis 6, **dadurch gekennzeichnet, daß** auf dem Chip (12) benutzerspezifische Einstellungen eines auf der CD (1) gespeicherten Programms oder Zwischenergebnisse von Berechnungen gespeichert werden können.

10. CD gemäß einem der vorhergehenden Ansprüche, **dadurch gekennzeichnet, daß** auf dem Chip 12 ein Betrag gespeichert ist, der der Bezahlung der Nutzung von auf der CD (1) gespeicherten Programmen oder Informationen dient.

11. CD gemäß einem der Ansprüche 1 bis 10, **dadurch gekennzeichnet, daß** das CD-Kopplungselement (11) zur kontaktlosen Übertragung von Daten zwischen dem Chip (12) und dem Datenverarbeitungsgerät aus einer Spule besteht.

12. CD gemäß Anspruch 11, **dadurch gekennzeichnet, daß** die Spule eine gewickelte Spule ist oder aus einer dünnen Metallschicht besteht.

13. CD gemäß einem der Ansprüche 1 bis 8, **dadurch gekennzeichnet, daß** das CD-Kopplungselement (11) zur kontaktlosen Übertragung von Daten zwischen dem Chip (12) und dem Datenverarbeitungsgerät eine kapazitive Koppelfläche ist, die durch eine dünne Metallschicht gebildet wird.

14. CD gemäß einem der Ansprüche 1 bis 8, **dadurch gekennzeichnet, daß** das CD-Kopplungselement (11) zur kontaktlosen Übertragung von Daten zwischen dem Chip (12) und dem Datenverarbeitungsgerät aus wenigstens einem optischen Kopplung element besteht.

15. CD gemäß Anspruch 14, **dadurch gekennzeichnet, daß** das optische Kopplungselement mit einem optischen Hilfselement (14) verbunden ist, das das für die optische Datenübertragung verwendete Licht an das optische Kopplungselement weiterleitet.

16. Vorrichtung zur Kommunikation zwischen einer CD (1) gemäß einem der Ansprüche 1 bis 15 und einem Datenverarbeitungsgerät, wobei die Vorrichtung aus einem CD-Laufwerk mit einer Einrichtung (50, 65) zum Drehen der CD (1), mit einer CD-Ausleseeinrichtung zum Auslesen der Informationen der sich drehenden CD (1) und mit einem separaten Laufwerk-Kopplungselement (51) besteht, **dadurch gekennzeichnet, daß** das Laufwerk-Kopplungselement (51) angepaßt ist, Daten von und zu einem Chip (12) der CD (1) über das CD-Kopplungselement (11) der CD (1) zu übertragen.

17. Vorrichtung gemäß Anspruch 16, **dadurch gekennzeichnet, daß** das Laufwerk-Kopplungselement (51) als Spule oder als kapazitive Koppelfläche oder als optisches Kopplungselement ausgebildet ist.

18. Vorrichtung gemäß einem der Ansprüche 16 oder 17, **dadurch gekennzeichnet, daß** eine Logikeinrichtung vorgesehen ist, mit der das Laufwerk-Kopplungselement (51) und die CD-Ausleseeinrichtung über separate Schnittstellen verbunden sind, und die mindestens eine weitere Schnittstelle zum Anschluß an das Datenverarbeitungsgerät besitzt, wobei die Logikeinrichtung so gestaltet ist, daß sie die von dem Datenverarbeitungsgerät kommenden Daten entsprechend deren Adressierung entweder an das Laufwerk-Kopplungselement (51) oder an die CD-Ausleseeinrichtung weiterleitet.

19. Vorrichtung zur Kommunikation zwischen einer CD (1) gemäß einem der Ansprüche 1 bis 15 und einem Datenverarbeitungsgerät, wobei die Vorrichtung aus einem CD-Laufwerk mit einer Einrichtung (50, 65) zum Drehen der CD (1) und mit einer CD-Ausleseeinrichtung zum Auslesen der Informationen der sich drehenden CD (1) besteht, **dadurch gekennzeichnet, daß** die CD-Ausleseeinrichtung gleichzeitig die Funktion eines Laufwerk-Kopplungselements (51) zur kontaktlosen Übertragung von Daten über das CD-Kopplungselement (11) der CD (1) von und zu einem Chip (12) der CD (1) übernimmt und daß eine Logikeinrichtung (B8) vorhanden ist, mit der die CD-Ausleseeinrichtung abhängig davon gesteuert wird, ob Informationen der CD ausgelesen oder Daten von und zu dem Chip übertragen werden.

## Claims

1. A data carrier in the form of a CD (1) comprising a circular CD body with an information-carrying layer (3), the CD (1) having a chip (12) integrated thereinto, **characterized in that** a CD coupling element (11) for noncontact transfer of data between the chip (12) and a data processing device is also integrated into the CD (1).

2. The CD of claim 1, **characterized in that** the chip (12) and the CD coupling element (11) are disposed between a center hole (5) of the CD (1) and an innermost data track.

3. The CD of claim 1 or 2, **characterized in that** the chip (12) and the CD coupling element (11) are potted by means of resin to form a module (10).

4. The CD of claim 3, **characterized in that** the CD body has a gap (13) in which the module (10) is inserted.

5. The CD of claim 3, **characterized in that** the module (10) is molded by surrounding material of the CD body.

6. A system comprising a data carrier in the form of a CD (1) and a CD drive, the CD (1) having a circular CD body with an information-carrying layer (3), and the CD (1) having a chip (12) integrated thereinto, **characterized in that** contact surfaces (6) which are contacted by a pressure plate (65) are applied to the surface of the CD (1), the pressure plate (65) being part of a CD drive, rotating with the CD (1) and having a CD coupling element (11) for noncontact transfer of data to or from a data processing device.

7. The CD of any of claims 1 to 6, **characterized in that** on the chip (12) data are stored and data can optionally be processed without which the information stored on the CD (1) cannot be processed, or not processed correctly.

8. The CD of claim 7, **characterized in that** the stored data are keys or algorithms for decrypting the information stored on the CD (1).

9. The CD of any of claims 1 to 6, **characterized in that** the chip (12) can store user-specific settings of a program stored on the CD (1) or temporary results of calculations.

10. The CD of any of the above claims, **characterized in that** the chip (12) stores an amount serving to pay for use of programs or information stored on the CD (1).

11. The CD of any of claims 1 to 10, **characterized in that** the CD coupling element (11) for noncontact transfer of data between the chip (12) and the data processing device consists of a coil.

12. The CD of claim 11, **characterized in that** the coil is a wound coil or consists of a thin metal layer.

13. The CD of any of claims 1 to 8, **characterized in that** the CD coupling element (11) for noncontact transfer of data between the chip (12) and the data processing device is a capacitive coupling surface formed by a thin metal layer.

14. The CD of any of claims 1 to 8, **characterized in that** the CD coupling element (11) for noncontact transfer of data between the chip (12) and the data processing device consists of at least one optical coupling element.

15. The CD of claim 14, **characterized in that** the optical coupling element is connected with an optical auxiliary element (14) which passes on the light used for optical data transfer to the optical coupling element.

16. An apparatus for communication between the CD (1) of any of claims 1 to 15 and a data processing device, the apparatus consisting of a CD drive with a device (50, 65) for rotating the CD (1), with a CD readout device for reading the information from the rotating CD (1) and with a separate drive coupling element (51), **characterized in that** the drive coupling element (51) is adapted to transfer data from and to the chip (12) of the CD (1) via the CD coupling element (11) of the CD (1).

17. The apparatus of claim 16, **characterized in that** the drive coupling element (51) is formed as a coil or capacitive coupling surface or optical coupling element.

18. The apparatus of either of claims 16 or 17, **characterized in that** a logic device is provided with which the drive coupling element (51) and the CD readout device are connected via separate interfaces, and which has at least one further interface for connection with the data processing device, the logic device being designed so as to pass on the data from the data processing device in accordance with their addressing either to the drive coupling element (51) or to the CD readout device.

19. An apparatus for communication between the CD (1) of any of claims 1 to 15 and a data processing device, the apparatus consisting of a CD drive with a device (50, 65) for rotating the CD (1) and with a CD readout device for reading the information from the rotating CD (1), **characterized in that** the CD readout device simultaneously performs the function of a drive coupling element (51) for contactless transfer of data via the CD coupling element (11) of the CD (1) from and to the chip (12) of the CD (1), and a logic device (B8) is present for controlling the CD readout device in dependence on whether information is read from the CD or data are transferred from and to the chip.

## Revendications

1. Support de données sous la forme d'un disque compact (1), comprenant un corps de disque compact de forme circulaire avec une couche portant de l'information (3), une puce électronique (12) étant intégrée dans le disque compact (1), **caractérisé en ce que**, dans le disque compact (1), est également intégré un organe de couplage (11) avec le disque compact, pour la transmission sans contact de données entre la puce électrique (12) et un appareil de traitement de données.

2. Disque compact selon la revendication 1, **caractérisé en ce que** la puce électronique (12) et l'organe de couplage (11) avec le disque compact sont disposés entre le trou central (5) du disque compact (1) et la piste d'information la plus interne.

3. Disque compact selon l'une des revendications 1 ou 2, **caractérisé en ce que** la puce électronique (12) et l'organe de couplage (11) du disque compact sont encapsulés au moyen d'une résine pour former un module (10).

4. Disque compact selon la revendication 3, **caractérisé en ce que** le corps du disque compact présente un évidemment (13) dans lequel est placé le module (10).

5. Disque compact selon la revendication 3, **caractérisé en ce que** le module (10) est encastré au moyen du matériau entourant le corps du disque compact.

6. Un système comprenant un support de données sous la forme d'un disque compact (1) et un lecteur de disque compact, dans lequel le disque compact (1) présente un corps de disque compact de forme circulaire avec une couche (3) portant de l'information, et dans lequel, dans le disque compact (1), une puce électronique (12) est intégrée, **caractérisé en ce que**, sur la surface supérieure du disque compact (1), des surfaces de contact (6) sont prévues, susceptibles d'être contactées par des petites plaques presseuses (65), les petites plaques presseuses (65) faisant partie du lecteur de disque compact, et tournent avec le disque compact (1) et présentent un organe de couplage avec le disque compact (11) pour la transmission sans contact de données vers, ou respectivement à partir, d'un appareil de traitement des données.

7. Disque compact selon l'une quelconque des revendications 1 à 6, **caractérisé en ce que** des données sont stockées dans la puce électronique (12), et, éventuellement, des données peuvent être traitées, sans lesquelles aucun traitement ou aucun traitement correct de l'information stockée sur le disque compact (1) n'est possible.

8. Disque compact selon la revendication 7, **caractérisé en ce que** les données stockées sont des clés ou des algorithmes de décryptage des informations stockées sur le disque compact (1).

9. Disque compact selon l'une quelconque des revendications 1 à 6, **caractérisé en ce que** des réglages spécifiques à l'utilisateur pour un programme stocké sur le disque compact (1) ou le résultat intermédiaire de calculs peuvent être stockés dans la puce électronique (12).

10. Disque compact selon l'une quelconque des revendications précédentes, **caractérisé en ce que**, dans la puce électronique (12), un montant est stocké, qui sert au paiement pour l'utilisation des programmes ou des informations stockés sur le disque compact (1).

11. Disque compact selon l'une quelconque des revendications 1 à 10, **caractérisé en ce que** l'organe de couplage (11) du disque compact pour la transmission de données sans contact entre la puce électronique (12) et l'appareil de traitement des données est composé d'une bobine.

12. Disque compact selon la revendication 11, **caractérisé en ce que** la bobine est une bobine à enroulement ou est composée d'une couche métallique mince.

13. Disque compact selon l'une quelconque des revendications 1 à 8, **caractérisé en ce que** l'organe de couplage (11) du disque compact pour la transmission sans contact de données entre la puce électronique (12) et l'appareil de traitement de données est une surface de couplage à capacitance formée d'une couche métallique mince.

14. Disque compact selon l'une quelconque des revendications 1 à 8, **caractérisé en ce que** l'organe de couplage (11) du disque compact pour la transmission sans contact de données entre la puce électronique (12) et l'appareil de traitement de données est composé d'au moins un organe de couplage optique.

15. Disque compact selon la revendication 14, **caractérisé en ce que** l'organe de couplage optique est relié à un organe optique auxiliaire (14) pour guider la lumière utilisée pour la transmission optique des données à l'organe de couplage optique.

16. Dispositif pour la communication entre un disque compact (1) selon l'une quelconque des revendications 1 à 15, et un appareil de traitement de données, dans lequel le dispositif est composé d'un lecteur de disque compact avec un organe (50, 65) pour la rotation du disque compact (1), avec un dispositif de lecture de disque compact pour la lecture des informations à partir du disque compact en rotation (1) et avec un organe séparé de couplage du lecteur (51), **caractérisé en ce que** l'organe de couplage (51) du lecteur est adapté pour le transfert de données vers et à partir de la puce électronique (12) du disque compact (1), via l'organe de couplage (11) de disque compact du disque compact (1).

17. Dispositif selon la revendication 16, **caractérisé en ce que** l'organe de couplage (51) du lecteur est réalisé sous la forme d'une bobine ou d'une surface de couplage à capacitance ou sous la forme d'un organe de couplage optique.

18. Dispositif selon l'une quelconque des revendications 16 ou 17, **caractérisé en ce qu'**un agencement logique est prévu, avec lequel l'organe de couplage (51) du lecteur et le dispositif de lecteur du disque compact sont reliés via des interfaces séparées, et qui présente au moins une interface supplémentaire pour le raccordement à l'appareil de traitement de données, l'agencement logique étant réalisé de façon à adresser des données venant de l'appareil de traitement de données en correspondance à leurs adresses, soit à l'organe de couplage (51) du lecteur, soit au dispositif de lecture de disque compact.

19. Dispositif pour la communication entre un disque compact (1) selon l'une quelconque des revendications 1 à 15, et un appareil de traitement de données, le dispositif étant composé d'un lecteur de disque compact et d'un dispositif (50, 65) pour la rotation du disque compact (1), et avec un dispositif de lecture du disque compact pour la lecture des informations à partir d'un disque compact (1) en rotation, **caractérisé en ce que** le dispositif de lecture du disque compact présente simultanément la fonction d'un organe de couplage (51) du lecteur pour la transmission de données sans contact, via l'organe de couplage de disque compact (11) du disque compact (1), vers et à partir d'une puce électronique (12) du disque compact (1), et **en ce qu'**un agencement logique (B8) est prévu, au moyen duquel le dispositif de lecture de disque compact est commandé en fonction du fait que des informations du disque compact sont à lire, ou que des données sont à transférer vers et à partir de la puce électronique.
